(19) Europäisches Patentamt
European Patent Office
Office européen des brevets

(11) **EP 2 927 872 A1**

(12) **EUROPEAN PATENT APPLICATION**

(43) Date of publication:
**07.10.2015 Bulletin 2015/41**

(21) Application number: **14305485.6**

(22) Date of filing: **02.04.2014**

(51) Int Cl.:
*G06T 7/20* (2006.01)     *H04N 19/105* (2014.01)
*H04N 19/139* (2014.01)    *H04N 19/583* (2014.01)
*H04N 19/51* (2014.01)     *H04N 19/172* (2014.01)
*H04N 19/154* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Robert, Philippe**
**35576 Cesson-Sévigné (FR)**

• **Conze, Pierre-Henri**
**35576 Cesson-Sévigné (FR)**
• **Crivelli, Tomas Enrique**
**35576 Cesson-Sévigné (FR)**

(74) Representative: **Huchet, Anne**
**Technicolor**
**1, rue Jeanne d'Arc**
**92443 Issy-les-Moulineaux Cedex (FR)**

(54) **Method and device for processing a video sequence**

(57) The invention relates to a method, performed by a computer, for processing a video sequence comprising a reference frame, wherein, for each current frame of the video sequence, the method comprises determining a motion field between a current frame and the reference frame; and in the case where a quality metric representative of the quality of the determined motion field between the current frame and the reference frame is below a quality threshold, determining a new reference frame among a group of previous current frames which have a quality metric above the quality threshold, and determining a motion field between the current frame and the reference frame by concatenating a motion field between the current frame and the new reference frame and a motion field between the new reference frame and the reference frame.

Figure 1

EP 2 927 872 A1

**Description**

<u>TECHNICAL FIELD</u>

The present invention relates generally to the field of video processing. More precisely, the invention relates to a method and a device for processing a video sequence comprising a reference frame.

<u>BACKGROUND</u>

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In the domain of video editing applications, methods are known for editing a reference frame selected by an operator in a video sequence, and propagating information from the reference frame to subsequent frames. The selection of the reference frame is manual and somehow random. Therefore an automated and controlled selection of reference frame for modification or editing by an operator would be desirable.

Besides, the propagation of information requires motion correspondence between the reference frame and the other frames of the sequence. State-of-the-art dense motion trackers process the sequence sequentially in a frame-by-frame manner, and associate, by design, features that disappear (occlusion) and reappear in the video, with different tracks, thereby losing important information of the long-term motion signal. Thus occlusions along the sequence or erroneous motion correspondences raise the issue of the quality of the propagation between distant frames. In other words, the length of good tracking depends on the scene content. In "Towards Longer Long-Range Motion Trajectories", in British Machine Vision Conference 2012, Rubinstein et al. disclose an algorithm that re-correlates short trajectories, called "tracklets", estimated with respect to different starting frames and links them to form a long-range motion representation. To that end, Rubinstein et al. tend to go towards longer long-range motion trajectories. If they appear to connect tracklets, especially cut by an occlusion, the method remains limited to sparse motion trajectories.

A highly desirable functionality of a video editing application is to be able to determine a set of reference frames along the sequence in order for example to track an area defined by an operator, or propagate information initially assigned to this area by the operator.

<u>SUMMARY OF INVENTION</u>

The invention is directed to a method for processing video sequence wherein a quality metric, that evaluates the quality of representation of a frame or a region by respectively another frame or a region in another frame in the video, is used to select a first reference frame or to introduce new reference frames in very long-term dense motion estimation.

In a first aspect, the invention is directed to a method, performed by a processor, for processing a video sequence comprising a reference frame, wherein, for each current frame of the video sequence, the method comprises determining a motion field between a current frame and the reference frame; and in the case where a quality metric representative of the quality of the determined motion field between the current frame and the reference frame is below a quality threshold, determining a new reference frame among a group of previous current frames which have a quality metric above the quality threshold, and determining a motion field between the current frame and the reference frame by concatenating a motion field between the current frame and the new reference frame and a motion field between the new reference frame and the reference frame.

Advantageously, such insertion of new reference frame based on quality metrics, avoid the motion drift and enhance the single reference frame estimation issues by combining the displacement vectors with good quality among all the generated multi-reference displacement vectors

According to a first variant, an inconsistency value is the distance between a first pixel in the reference frame and a point in the reference frame corresponding to the endpoint of an inverse motion vector from the endpoint into the current frame of a motion vector from the first pixel. Advantageously, the quality metric is function of a mean of inconsistency values of a set of pixels of the reference frame.

According to a second variant, a binary inconsistency value is set in the case where the distance between a first pixel in the reference frame and a point in the reference frame corresponding to the endpoint of an inverse motion vector from the endpoint into the current frame of a motion vector from the first pixel is above a threshold. The binary inconsistency value is reset in the case where the distance is below a threshold. Advantageously, the quality metric comprises a normalized number of pixels among a set of pixels of the reference frame whose binary inconsistency value is reset.

According to a third variant, a motion compensated absolute difference is the absolute difference between the color or luminance of the endpoint into the current frame of a motion vector from a first pixel in the reference frame and respectively the color or luminance of the first pixel in the reference frame. Advantageously the quality metric is function of a mean of motion compensated absolute differences of a set of pixels of the reference frame.

According to a fourth variant, the quality metric comprises a peak signal-to-noise ratio based on the mean of motion compensated absolute differences of a set of pixels of the reference frame.

According to a fifth variant, the quality metric comprises a weighted sum of a function of the inconsistency value and of a function of the motion compensated absolute difference. Advantageously, the quality metric is function of a mean of the weighted sums computed for a set of pixels of the reference frame.

According to a further advantageous characteristic, the set of pixels used for determining the quality metric are comprised in a region of interest of the reference frame.

According to a further advantageous characteristic, determining a new reference frame among a group of previous current frames which have a quality metric above the quality threshold comprises selecting the previous current frame closest to the current frame.

According to another advantageous characteristic, for a user selected region of a first frame, the method further comprises determining a first reference frame. The determining of a first reference frame comprises, for each current frame of the video sequence, determining a motion field between the first frame and the current frame; determining a quality metric representative of the quality of the determined motion field between the first frame and the current frame; determining a size metric comprising a number of pixels in the region of the current frame corresponding to user selected region of the first frame; and in the case where the quality metric is higher a quality threshold, and in case where the size metric is higher than a size threshold, setting the first reference frame to the current frame and setting the size threshold to the size metric. This size metric is used as a resolution metric for the user selected region.

Advantageously, the method allows that starting from a user initial selection of a first frame, a possible finer representation in the sequence is determined by the first reference frame automatically and responsive to a quality representation metric.

According to a further advantageous characteristic, the size threshold is initialized to a number of pixels in said user selected region of said first frame.

According to a further advantageous characteristic, determining a quality metric representative of the quality of the determined motion field between the first frame and the current frame further comprises determining the number of pixels of the user selected region of the first frame that are visible in the current frame.

In a second aspect, the invention is directed to a computer-readable storage medium storing program instructions computer-executable to perform the disclosed method.

In a third aspect, the invention is directed to a device comprising at least one processor and a memory coupled to the at least one processor, wherein the memory stores program instructions, wherein the program instructions are executable by the at least one processor to perform the disclosed method.

Any characteristic or variant described for the method is compatible with a device intended to process the disclosed methods and with a computer-readable storage medium storing program instructions.

## BRIEF DESCRIPTION OF DRAWINGS

Preferred features of the present invention will now be described, by way of non-limiting example, with reference to the accompanying drawings, in which:

**Figure 1** illustrates steps of the method according to a first preferred embodiment;
**Figure 2** illustrates inconsistency according to a variant of the quality metric;
**Figure 3** illustrates occlusion detection according to a variant of the quality metric;
**Figure 4** illustrates steps of the method according to a second preferred embodiment; and
**Figure 5** illustrates a device according to a particular embodiment of the invention.

## DESCRIPTION OF EMBODIMENTS

A salient idea of the invention is to consider a quality measure that evaluates the quality of representation of a frame or a region by respectively another frame or a region in another frame in the video. In a first preferred embodiment, such quality measure is used to introduce a new reference frame in very long-term dense motion estimation in a video sequence. Instead of relying only on one single reference frame, the basic idea behind this is to insert new reference frames along the sequence each time the motion estimation process fails and then to apply the motion estimator with respect to each of these new reference frames. Indeed, a new reference frame replaces the previous reference frame for image processing algorithm (such as motion field estimation). Advantageously, such insertion of new reference frame based on quality metrics, avoids the motion drift and enhance the single reference frame estimation issues by combining the displacement vectors with good quality among all the generated multi-reference displacement vectors. In a second preferred embodiment, such quality measure is used to select a first reference frame in the video sequence wherein a target area in a frame selected by a user is better represented.

It should be noted that the "reference frame" terminology is ambiguous. A reference frame in the point of view of user interaction and a reference frame considered as an algorithmic tool should be dissociated. In the context of video editing for instance, the user will insert the texture/logo in one single reference frame and run the multi-reference frames algorithm described hereinafter. The new reference frames inserted according to the invention are an algorithmic way to perform a better motion estimation without any user interaction. To that end, in the second embodiment, the user selected frame is called first frame, even if initially used as a reference frame in a search for a first reference frame.

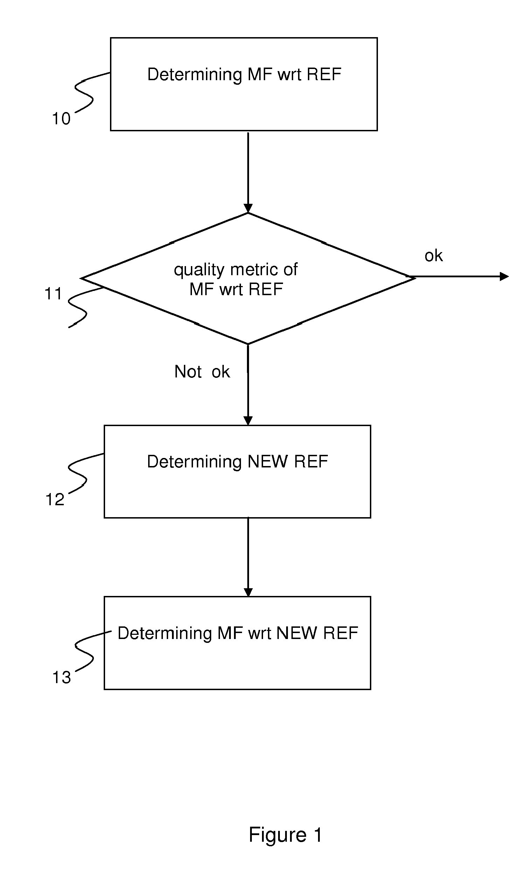

Figure 1 illustrates steps of the method according to a first preferred embodiment. In this embodiment, we assume that motion estimation between a reference frame and a current frame of the sequence is processed sequentially starting from a first frame next to the reference frame and then moving away from it progressively from current frame to current frame. In a nutshell, a quality metric evaluates for each current frame the quality of correspondence between the current frame and the reference frame. When quality reaches a quality threshold, a new reference frame is selected among the previously processed current frames (for example the previous current frame). From now on motion estimation is carried out and assessed with respect to this new reference frame. Other new reference frames may be introduced along the sequence when processing the next current frames. Finally, motion vectors of a current frame with respect to the first reference frame are obtained by concatenating the motion vectors of the current frame with successive motion vectors computed between pairs of reference frames up to reach the first reference frame. In a preferred variant, the quality metric is normalized and defined in the interval [0,1], with the best quality corresponding to 1. According to this convention, a quality criterion is reached when the quality metric is above the quality threshold.

An iteration of the processing method for a current frame of the video sequence is now described. The current frame is initialized to as one of the two neighboring frames of the reference frame (if the reference frame is neither the first nor the last one), and then the next current frame is the neighboring frame of the current frame.

In a first step 10, a motion field between the current frame and the reference frame is determined. A motion field comprises for each pair of frames comprising a reference frame and a current frame, and for each pixel of the current frame, a corresponding point (called motion vector endpoint) in the reference frame. Such correspondence is represented by a motion vector between the first pixel of the current frame and the corresponding point in the reference frame. In the particular case where the point is out of the camera field or occluded, such corresponding point does not exist.

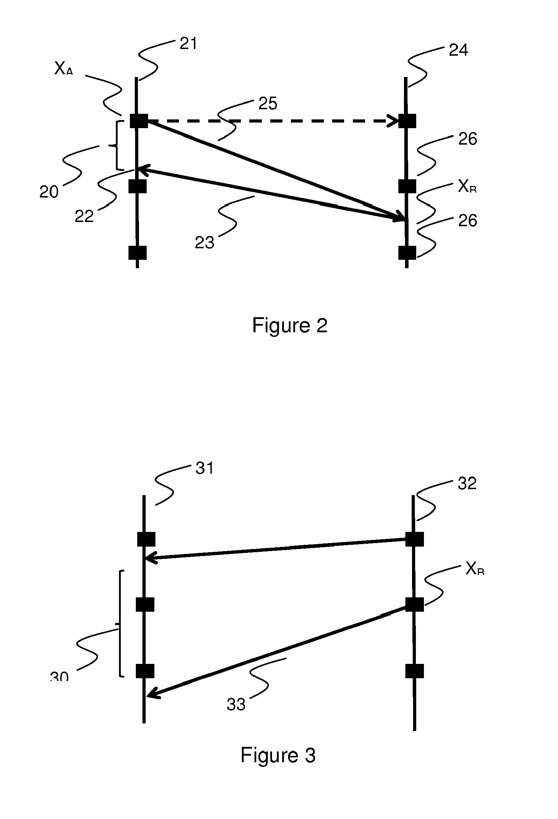

In a second step 11, for the pair of frames comprising the reference frame and the current frame, a quality metric representative of the quality of the determined motion field is evaluated and compared to a motion quality threshold. The quality metric is evaluated according to different variants using **Figure 2.**

In a first variant, the quality metric is function of a mean of inconsistency values of a set of pixels of the reference frame. An inconsistency value is the distance 20 between a first pixel $X_A$ in the reference frame 21 and a point 22 in the reference frame 21 corresponding to the endpoint of an inverse motion vector 23 from the endpoint $X_B$ into the current frame 24 of a motion vector 25 from the first pixel $X_A$. Indeed quality measure relies on both forward and backward motion fields estimated between reference frame and current frame. Forward 23 (resp. backward 25) motion field refers for example to the motion field that links the pixels of reference frame 21 (resp. current frame 24) to current frame 24 (resp. reference frame 21). Consistency of these two motion fields, generically called direct motion field and inverse motion field is a good indicator of their intrinsic quality. Inconsistency value between two motion fields is given by:

$$\text{Inc}(\vec{x}_A, \vec{D}) = \left\| \vec{D}(\vec{x}_A) + \vec{D}(\vec{x}_B) \right\|_2$$

with :

$$\vec{x}_B = \vec{x}_A - \vec{D}(\vec{x}_A)$$

In this equation, $\vec{x}_A$ is the 2D position of a pixel while $\vec{x}_B$ corresponds to the endpoint of motion vector $\overrightarrow{D(x_A)}$ in the current frame. In a refinement, as estimated motion has generally a subpixel resolution, this latter position does not correspond to a pixel. Thus $\overrightarrow{D(x_B)}$ is estimated via bilinear interpolation from the vectors attached to the four neighbouring pixels 26 in a 2D representation.

In a second variant, the inconsistency values are binarized. A binary inconsistency value is set (for instance to a value one) in the case where the distance between a first pixel $X_A$ in the reference frame 21 and a point 22 in the reference frame 21 corresponding to the endpoint of an inverse motion vector 23 from the endpoint $X_B$ into the current frame 24 of a motion vector 25 from the first pixel $X_A$ is above an inconsistency threshold. The binary inconsistency value is reset (for instance set to zero) in the case where the distance is below an inconsistency threshold. The quality metric comprises a normalized number of pixels among a set of pixels of the reference frame 21 whose binary inconsistency value is reset.

In a third variant, the quality metric is estimated using a matching cost representative of how accurately a first pixel $X_A$ of a reference frame 21 can be reconstructed by the matched point $X_B$ in the current frame. A motion compensated absolute difference is computed between the endpoint $X_B$ into the current frame 24 of a motion vector 25 from a first pixel $X_A$ in the reference frame 21 and the first pixel $X_A$ in the reference frame 21. The difference, for instance, refers to the difference of the luminance value of the pixel in the RGB colour scheme. However, this variant is compatible with any value representative of the pixel in the video as detailed above. In this variant, the quality metric is function of a mean of motion compensated absolute differences of a set of pixels of the reference frame. A classical measure is the matching cost that can be for example defined by:

$$C(\vec{x}_A, \vec{D}) = \left( \sum_{c \in \{r, g, b\}} \left| I_C^A(\vec{x}_A) - I_C^B(\vec{x}_A - \vec{D}) \right| \right)$$

The matching cost $C(\vec{x}_A, \vec{D})$ of pixel $x_A$ in the reference frame corresponds in this case to the sum on the 3 color channels RGB (corresponding to $I_C$) of absolute difference between the value at this pixel and the value at point $(\vec{x}_A - \vec{D})$ in the current frame where $\vec{D}$ corresponds to the motion vector 25 with respect to current frame assigned to pixel $x_A$.

In a fourth variant, quality metric a function of a peak signal-to-noise ratio of a set of pixels of the reference frame. Let us consider a set of $N$ pixels $x_A$ of the reference frame. To compute the peak signal-to-noise ratio (PSNR), we start by estimating a mean square error (MSE), as follows:

$$MSE = \frac{1}{N} \sum_{\vec{x_A}} \left[ I^A(\vec{x_A}) - I^B(\vec{x_A} - \vec{D}(\vec{x_A})) \right]^2$$

where $\vec{D(x_A)}$ corresponds to the motion vector with respect to current frame assigned to current pixel $x_A$.

Then, the PSNR is computed as follows:

$$PSNR = 20 . \log_{10} \left( \frac{max(I^A)}{\sqrt{MSE}} \right)$$

In another variant, an important information that must be considered to evaluate the quality of the representation of a first frame by a current frame is the number of pixels of the first frame with no correspondence in the current frame either because the scene point observed in first frame is occluded in current frame or because it is out of the camera field in the current frame. Techniques exist to detect such pixels. For example, **figure 3** illustrates the method that consists in detecting possible pixels of first frame that have no correspondence in current frame (called occluded pixels) by projecting onto first frame 31 the motion field 33 of current frame 32 and marking the closest pixels to the endpoints in frame 31, and then identifying the pixels in frame 31 that are not marked. The more numerous the occluded pixels marked in frame 31 (i.e. pixels of frame 31 occluded in frame 32), the less representative frame 32 is for frame 31.

In a fifth variant, a global quality metric is defined in order to evaluate how accurately a current frame is globally well represented by a reference frame. For example, this global quality can result from counting the number of pixels which have a cost matching under a threshold, or counting the number of pixels which are "consistent" (i.e. which inconsistency distance is under an inconsistency threshold as in the second variant, i.e with a binary inconsistency value set to 0).

A proportion can then be derived with respect to the total number of visible pixels (that is pixels that are not occluded). In addition, the proportion of visible pixels of current frame in reference frame can itself be a relevant parameter of how well current frame is represented by a reference frame.

In a variant where only the inconsistency value is used to measure motion quality, and if an inconsistency threshold is introduced to distinguish consistent and inconsistent motion vector, the motion quality metric is :

$$Q_D(A/B) = \frac{\text{number of consistent vectors}}{\text{number of consistent vectors} + \text{number of inconsistent vectors}}$$

Depending on the application, a variant of the quality metric is :

$$Q_D(A/B) = \frac{\text{number of consistent vectors}}{N}$$

where N is the number of pixels in an image.

According to another variant, these 'global' metric can also be computed on a particular area of interest indicated by the operator.

According to another variant, instead of a binary inconsistency value resulting from thresholding, a weight can be introduced. For example, this weight can be given by the negative exponential function of the cost matching or of the inconsistency distance. Therefore, we propose the following quality measure of motion field in current frame with respect to reference frame:

$$Q_D(A/B) = \alpha \sum_A f(C(\vec{x}_A, \vec{D}(x_A))) + \beta \sum_A g(\text{Inc}(\vec{x}_A, \vec{D}(\vec{x}_A)))$$

The quality metric is preferably defined in the interval [0,1], with the best quality corresponding to 1. However, the invention is not limited to this convention. In this context, a possible solution for $f()$ and $g()$ can be :

$$f(p) = g(p) = e^{-p^2} \quad \text{and} \quad \alpha + \beta = \frac{1}{N}$$

N is the number of pixels that are considered in this quality estimation.

Once variants of the quality metric are disclosed, the further steps of the processing method for a current frame iteration are now described.

Thus, in the second step 11, in the case where a quality metric, for instance belonging to [0,1], representative of the quality of the determined motion field (ie the motion field between the current frame and the reference frame, either forward or backward) is below a quality threshold, a new reference frame is determined in a step 12 among a group of previous current frames which have a quality metric above the quality threshold. Accordingly, the "to-the-reference" motion field (respectively vector) between the current frame and the reference frame is determined in a step 13 by concatenating (or summing) a motion field (respectively vector) between the current frame and the new reference frame and a motion field (respectively vector) between the new reference frame and the reference frame. Accordingly, the "from-the-reference' motion field (respectively vector) between the reference frame and the current frame is determined in a step 13 by concatenating (or summing) a motion field (respectively vector) between the reference frame and the new reference frame and a motion field (respectively vector) between the new reference frame and the current frame. In a variant, as soon as the quality metric is below the quality threshold, the previous current frame in the sequential processing is selected as a new reference frame. Then new pairs of frames are considered grouping this new reference frame and next current frames (not yet processed). Then, the correspondence between these frames and the reference frame is obtained by concatenation of the motion fields (respectively vectors).

The method can be carried out starting from first frame sequentially in any direction along the temporal axis.

In a variant of the selection of the new reference frame among previous frame, direct motion estimation with respect to all the previously selected new reference frames is evaluated in order to check if one of them can be a good reference frame for the current frame. Actually, depending on the motion in the scene, it may happen that a previous reference frame that was abandoned becomes again a good candidate for motion estimation. If no reference frame is appropriate, then the other previously processed current frames are tested as possible new reference frames for the current frame.

Yet in another variant of the first embodiment, the set of pixels used for determining the quality metric are comprised in a region of interest of the reference frame.

In the case where the area of interest is partially occluded in the current frame, quality metric only concerns the visible parts. On the other hand, the selection of a new reference frame requires the candidate new reference frame to contain all the pixels of the reference area visible in the current frame. When the size of the visible part of the area of interest is below a threshold, then direct motion estimation is carried out between the current frame and the reference frames in order to possibly select another reference. Actually, it may happen that the area of interest is temporarily occluded and becomes visible again after some frames.

The global processing method for the set of current frames of the video sequence is now described for the first embodiment.

Let us focus on the estimation of the trajectory $T(x_{ref_0})$ along a sequence of $N + 1$ RGB images $\{I_n\}_{n \in [0,...,N]}$ with $I_{ref_0} = I_0$ considered as reference frame. $T(x_{ref_0})$ starts from the grid point $x_{ref_0}$ of $I_{ref_0}$ and is defined by a set of *from-the-reference* displacement vectors $\{d_{ref_0,n}(x_{ref_0})\} \; \forall n \in [ref_0 + 1,...,N]$. These displacement vectors start from pixel $x_{ref_0}$ (pixel they are assigned to) and point at each of the other frames $n$ of the sequence. In practice, the quality of $T(x_{ref_0})$ is estimated through the study of the binary inconsistency values assigned to each displacement vectors $\{d_{ref_0,n}(x_{ref_0})\} \; \forall n \in [ref_0 + 1, ...,N]$. If one of these vectors is inconsistent, the process automatically adds a new reference frame at the instant which precedes the matching issue and runs the procedure described above.

Let us assume that the long-term dense motion estimation involved for the estimation of $T(x_{ref_0})$ fails before $I_N$ and more precisely at $I_{fail_0}$ with $fail_0 \leq N$. We propose to introduce a new reference frame at $I_{fail0-1}$, i.e. at the instant which precedes the tracking failure and for which $d_{ref_0,fail_0-1}(x_{ref_0})$ has been accurately estimated.

Once this new reference frame (referred to as $I_{ref_1}$) has been inserted, we run new motion estimations starting from the position $x_{ref_0} + d_{ref_0,ref_1}(x_{ref_0})$ in $I_{ref_1} = I_{fail0-1}$ between $I_{ref_1}$ and each subsequent frames $I_n$ with $n \in [ref_1 + 1,...,N]$. Thus, we obtain the set of displacement vectors $\{d_{ref_1,n}\} \; \forall n \in [ref_1 + 1,...,N]$. These estimates allow to obtain a new version of the displacement vectors we would like to correct: $\{d_{ref_0,n}(x_{ref_0})\}_{n \in [ref_1+1,...,N]}$. Indeed, each initial estimate of these displacement vectors can be replaced by the vector obtained through concatenation of $d_{ref_0,ref_1}$ estimated with respect to $I_{ref_0}$ and $d_{ref_1,n}$ we just computed with respect to $I_{ref_1}$:

$$d_{ref_0,n}(x_{ref_0}) = d_{ref_0,ref_1}(x_{ref_0}) + d_{ref_1,n}(x_{ref_0} + d_{ref_0,ref_1}(x_{ref_0})) \qquad (0)$$

The vector $d_{ref_1,n}(x_{ref_0} + d_{ref_0,ref_1}(x_{ref_0}))$ can be computed via spatial bilinear interpolation.

If this resulting new version of $T(x_{ref_0})$ fails again, at $I_{fail_1}$ for instance (with $fail_0 < fail_1 < N$), we insert a new reference frame $I_{ref_2}$ at $I_{fail1-1}$ and we perform the long-term estimator starting from $I_{ref_2}$. Thus, we can obtain new estimates of the displacement vectors $\{d_{ref_0,n}(x_{ref_0})\}$ with $n \in [ref_2 + 1,...,N]$ as follows:

$$d_{ref_0,n}(x_{ref_0}) = d_{ref_0,ref_1}(x_{ref_0}) + d_{ref_1,ref_2}(x_{ref_0} + d_{ref_0,ref_1})$$
$$+ d_{ref_2,n}(x_{ref_0} + d_{ref_0,ref_1} + d_{ref_1,ref_2}) \qquad (0)$$

We apply an exactly similar processing each time $T(x_{ref0})$ fails again, up to the end of the sequence. Advantageously the displacement selection criteria (including the *brightness constancy assumption*) are more valid when we rely on a reference frame which is closer from the current frame than the initial reference frame ($I_{ref_0}$). In case of strong color variations especially, the matching can be more easily performed. Thus this multi reference frames motion estimation is enhaced compared to classic single reference frame approach.

Whatever the criteria, a motion quality threshold must be set according to the quality requirements to determine from which instant a new reference frame is needed. As previously described, a local assessment which focuses only on the region of interest may be relevant when the whole images are not involved. The quality of the motion estimation process highly depends on the area under consideration and studying the motion vector quality for the whole image could badly influence the reference frame insertion process in this case.

According to a particular case where the estimation of to-the-reference displacement vectors $d_{n,ref_0}(x_n)$ $\forall n$ is needed, such particular case being adapted to texture insertion and propagation for instance, it seems difficult to apply this multi-reference frames processing starting from each frame $I_n$ to $I_{ref_0}$ for computational issues. Thus the processing of the from-the-reference direction from $I_{ref_0}$ is kept and therefore the introduction of new reference frames is decided with respect to the quality of from-the-reference displacement vectors. Although *To-the-reference* displacement vectors can benefit from the introduction of these new reference frames. If we come back to the previous example where $I_{ref_1}$ and $I_{ref_2}$ have been inserted, inaccurate displacement vectors $d_{n,ref_0}(x_n)$ starting from the grid point $x_n$ of $I_n$ with n $\in$ [$ref_2$ + 1, ..., N] can be refined by considering the following concatenations:

$$d_{n,ref_0}(x_n) = d_{n,ref_2}(x_n) + d_{ref_2,ref_1}(x_n + d_{n,ref_2})$$
$$+ d_{ref_1,n}(x_n + d_{n,ref_2} + d_{ref_2,ref_1}) \tag{0}$$

To ensure a certain correlation between the quality assessment of *from-the-reference* displacement vectors and the effective quality of *to-the-reference* displacement vectors, we propose to select the percentage of pixels whose corresponding displacement vector is inconsistent among the previously described criteria for the insertion of new reference frames. We explain this choice by the fact that the inconsistency involved in this criterion deals with *forward-backward* inconsistency and therefore simultaneously addresses the quality of both *from-the-reference* and *to-the-reference* displacement vectors.

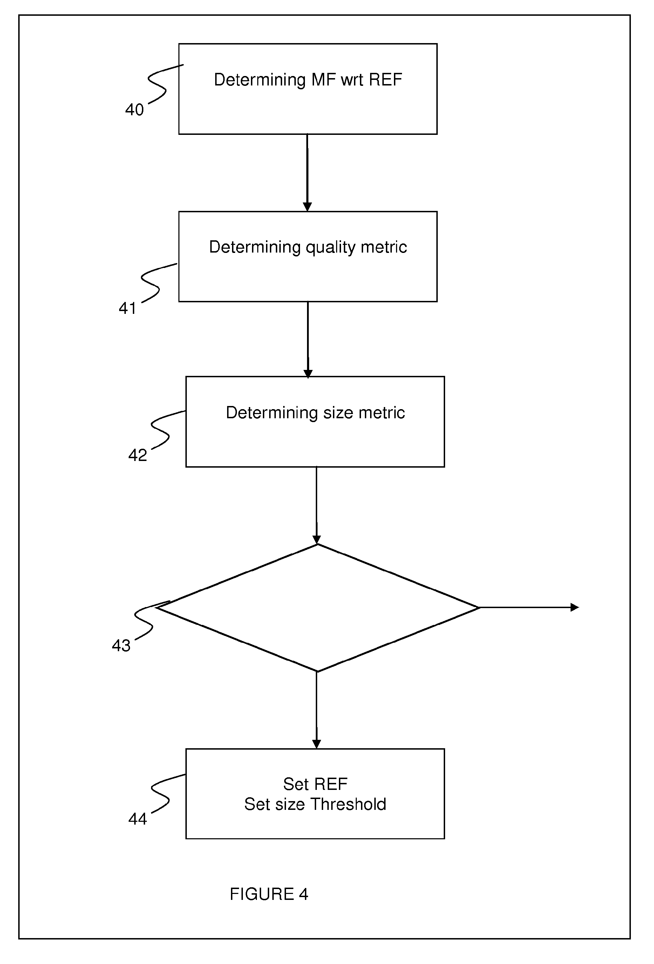

**Figure 4** illustrates steps of the method according to a second preferred embodiment. In this embodiment, a first reference frame is determined for a user selected region of a first frame of the video sequence. For instance, given a video sequence, a user selects a particular frame either arbitrarily or according to a particular application that demands specific characteristics. Such user selected frame is, in the prior art, used as reference frame for any image processing algorithm. For example, if the user focuses his attention on a particular area he wants to edit, he may need this area to be totally visible in the reference frame. On the other hand, a region selected by the user in a frame may have a better resolution in another frame. Actually, this is not sure that the operator has selected the representation of the region along the video sequence with the finest resolution. So, the invention advantageously allows that starting from this initial selection, a possible finer representation in the sequence is determined. This is done by identifying the corresponding region in the other frames, evaluating its size with respect to the size of the reference region. In a variant, the size of the regions is defined by their number of pixels.

An iteration of the processing method for determining a first reference frame among the current frames of the video sequence is now described. The reference frame is initialized as the first frame (selected by the user), and a size threshold to the size of the user selected region in the first frame. Then the next current frame is the neighboring frame of the current frame.

In a first step 40, a motion field between the first frame and the current frame is determined. Advantageously, forward and backward motion fields are estimated between the first frame, used as reference frame, and the other current frames of the sequence. Those motion fields allow to identify the user selected region in the frames of the sequence. In a variant, motion field estimation is limited to the selected region of the reference frame. The estimation is obtained via pixel-wise or block-based motion estimation. The resulting dense motion field gives the correspondence between the pixels of the first frame and the pixels/points in each of the other current frames. If motion has a subpixel resolution, the pixel in the current frame corresponding to a given pixel $X_a$ of the first frame is identified as the closest one from the endpoint of the motion vector attached to pixel $X_A$. Consequently, the region $R_B$ in current frame corresponding to the first region $R_A$ in the first frame is defined as the set of pixels that are the closest pixels with respect to the endpoints of the motion vectors attached to pixels of the first region.

In a second step 41, a quality metric representative of the quality of the determined motion field between the first frame A and the current frame B is estimated. According to an advantageous characteristic, the estimation is processed for the first region $R_A$, defined by its set of pixels $X_A$. In order to provide relevant information for the comparison between frames, the motion fields should be reliable. For that purpose, a motion quality metric is derived using for example one of the above variants. This measure noted $Q_D(R_A,B)$ is limited to the area of interest $R_A$ selected by the operator in first frame A. In a preferred variant, when the quality metric $Q_D(R_A,B)$ is above a quality threshold it indicates that the area $R_B$ in current frame B corresponding to region $R_A$ is well identified.

According to a variant, another relevant parameter of the motion quality is the proportion of pixels of the first region $R_A$ visible in the current frame B (neither occluded nor out of the current frame). This proportion noted $O_D(R_A,B)$ must be also above a visibility threshold. Advantageously, the visibility threshold is close to 1 so that most of the pixels of region $R_A$ are visible in current frame B, to be able to consider that $R_A$ can be represented by $R_B$.

In a third step 42, a size metric comprising a number of pixels in the region of the current frame corresponding to user selected region of the first frame is estimated. Advantageously this characteristic allows a comparison of the resolution of both corresponding regions $R_A$ and $R_B$. For this purpose, a variant consists in directly comparing the sizes of the regions, i.e. their number of pixels (called $N_A$ and $N_B$) : if $N_A > N_B$, then first region $R_A$ has a better resolution than region $R_B$, otherwise identified region $R_B$ is a good candidate to better represent the area $R_A$ initially selected by the operator.

In a fourth step 43, those two above metrics are tested. In the case where the quality metric is higher a quality threshold, and in case where the size metric is higher than a size threshold, the first reference frame is set to the current frame and the size threshold updated with the size metric.

The steps are then sequentially iterated for each successive current frame of the sequence.

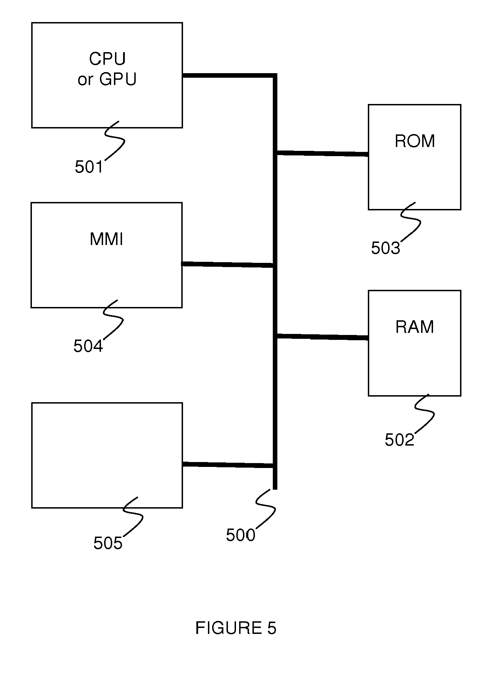

The skilled person will also appreciate that as the method can be implemented quite easily without the need for special equipment by devices such as PCs, laptops, tablets, PDA, mobile phone including or not graphic processing unit. According to different variants, features described for the method are being implemented in software module or in hardware module. **Figure 5** illustrates a device for processing a video sequence according to a particular embodiment of the invention. The device is any device intended to process video bit-stream. The device 400 comprises physical means intended to implement an embodiment of the invention, for instance a processor 501 (CPU or GPU), a data memory 502 (RAM, HDD), a program memory 503 (ROM), a man machine (MMI) interface 504 or a specific application adapted for the display of information for a user and/or the input of data or parameters (for example, a keyboard, a mouse, a touchscreen allowing a user to select and edit a frame..) and optionally a module 505 for implementation any of the function in hardware. Advantageously the data memory 502 stores the bit-stream representative of the video sequence, the sets of dense motion fields associated to the video sequence, program instructions that may be executable by the processor 501 to implement steps of the method described herein. As previously exposed, the generation of dense motion estimation is advantageously pre-computed for instance in the GPU or by a dedicated hardware module 505. Advantageously the processor 501 is configured to display the processed video sequence on a display device 504 attached to the processor. In a variant, the processor 501 is Graphic Processing Unit, coupled to a display device, allowing parallel processing of the video sequence thus reducing the computation time. In another variant, the processing method is implemented in a network cloud, i.e. in distributed processor connected through a network interface.

Each feature disclosed in the description and (where appropriate) the claims and drawings may be provided independently or in any appropriate combination. Features described as being implemented in software may also be implemented in hardware, and vice versa. Reference numerals appearing in the claims are by way of illustration only and shall have no limiting effect on the scope of the claims.

In another aspect of the invention, the program instructions may be provided to the device 500 via any suitable computer-readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing."

Naturally, the invention is not limited to the embodiments previously described.

**Claims**

1. A method for processing a video sequence comprising a reference frame, the method comprising, for each current frame of the video sequence :

   • determining (10) a motion field between a current frame and said reference frame;
   • in the case where a quality metric representative of the quality of the determined motion field between said current frame and said reference frame is below a quality threshold, determining a new reference frame (12) among a group of previous current frames which have a quality metric above said quality threshold, and determining a motion field (13) between said current frame and said reference frame by concatenating a motion field between said current frame and said new reference frame with a motion field between said new reference frame and said reference frame.

2. The method of claim 1 wherein an inconsistency value is the distance between a first pixel in the reference frame and a point in the reference frame corresponding to the endpoint of an inverse motion vector from the endpoint into said current frame of a motion vector from said first pixel; and wherein said quality metric is function of a mean of inconsistency values of a set of pixels of said reference frame.

3. The method of claim 1 wherein a binary inconsistency value is set in the case where the distance between a first pixel in the reference frame and a point in the reference frame corresponding to the endpoint of an inverse motion vector from the endpoint into said current frame of a motion vector from said first pixel is above an inconsistency threshold; wherein said binary inconsistency value is reset in the case where said distance is below the inconsistency threshold, and wherein said quality metric comprises a normalized number of pixel among a set of pixels of said reference frame whose binary inconsistency value is reset.

4. The method of claim 1 wherein a motion compensated absolute difference is the absolute difference between color or luminance of the the endpoint into said current frame of a motion vector from a first pixel of the reference frame and color or luminance of said first pixel of said reference frame, and wherein said quality metric is function of a mean of motion compensated absolute differences of a set of pixels of said reference frame.

5. The method of claim 4 wherein said quality metric comprises a peak signal-to-noise ratio based on the mean of motion compensated absolute differences of a set of pixels of said reference frame.

6. The method of claims 1 and 4 wherein said quality metric comprises a weighted sum of a function of the inconsistency value and of a function of the motion compensated absolute difference.

7. The method of any of claims 1 to 6 wherein said set of pixels used for determining the quality metric are comprised in a region of interest of said reference frame.

8. The method of any of claims 1 to 7 wherein determining a new reference frame among a group of previous current frames which have a quality metric above said quality threshold comprising selecting the previous current frame closest to the current frame.

9. The method of any of claims 1 to 8 wherein for a user selected region of a first frame, the method further comprises determining a first reference frame wherein, for each current frame of the video sequence:

   • determining a motion field between said first frame and said current frame;
   • determining a quality metric representative of the quality of the determined motion field between said first frame and said current frame;
   • determining a size metric comprising a number of pixels in the region of said current frame corresponding to user selected region of said first frame;
   • in the case where said quality metric is higher than a quality threshold, and in case where said size metric is higher than a size threshold, setting the first reference frame to said current frame and setting the size threshold to said size metric.

10. The method of claim 9 wherein said size threshold is initialized to a number of pixels in said user selected region of said first frame.

11. The method of claim 9 wherein determining a quality metric representative of the quality of the determined motion field between said first frame and said current frame further comprising determining the number of pixels of the user selected region of said first frame that are visible in the current frame.

12. A computer-readable storage medium storing program instructions computer-executable to perform the method of any of claims 1 to 8.

13. A device (500) comprising at least one processor (501); and a memory (502) coupled to the at least one processor, wherein the memory stores program instructions, wherein the program instructions are executable by the at least one processor to perform the method of any of claims 1 to 11.

Figure 1

Figure 2

Figure 3

FIGURE 4

FIGURE 5

Europäisches
Patentamt

European
Patent Office

Office européen
des brevets

## EUROPEAN SEARCH REPORT

Application Number

EP 14 30 5485

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/107833 A1 (THOMSON LICENSING [FR]) 25 July 2013 (2013-07-25) | 1,4,5, 7-13 | INV. G06T7/20 H04N19/105 H04N19/139 H04N19/583 H04N19/51 H04N19/172 ADD. H04N19/154 |
| Y | * pages 7-15 * | 2,3,6 | |
| Y | CONZE PIERRE-HENRI ET AL: "Dense motion estimation between distant frames: Combinatorial multi-step integration and statistical selection", 2013 IEEE INTERNATIONAL CONFERENCE ON IMAGE PROCESSING, IEEE, 15 September 2013 (2013-09-15), pages 3860-3864, XP032565629, DOI: 10.1109/ICIP.2013.6738795 [retrieved on 2014-02-11] * Chapters 1-3 * | 2,3,6 | |
| Y | Tomas Crivelli ET AL: "Extended Abstract for Multi-step flow fusion: towards accurate and dense correspondences in long video shots", British Machine Vision Conference 2012, 3 September 2012 (2012-09-03), pages 1-1, XP055059132, DOI: 10.5244/C.26.107 Retrieved from the Internet: URL:http://dx.doi.org/10.5244/C.26.107 [retrieved on 2013-04-11] * page 1 * | 6 | |

-/--

TECHNICAL FIELDS
SEARCHED (IPC)

G06T
H04N

The present search report has been drawn up for all claims

| Place of search | Date of completion of the search | Examiner |
|---|---|---|
| Munich | 24 September 2014 | Lindgren, Johan |

Europäisches
Patentamt

European
Patent Office

Office européen
des brevets

# EUROPEAN SEARCH REPORT

**Application Number**

EP 14 30 5485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TOMAS CRIVELLI ET AL: "Multi-step flow fusion: towards accurate and dense correspondences in long video shots", PROCEEDINGS OF THE BRITISH MACHINE VISION CONFERENCE, 3 September 2012 (2012-09-03), pages 107.1-107.12, XP055059129, DOI: 10.5244/C.26.107 ISBN: 978-1-90-172546-9 * the whole document * | 1-13 | |
| A | TOMAS CRIVELLI ET AL: "From optical flow to dense long term correspondences", IMAGE PROCESSING (ICIP), 2012 19TH IEEE INTERNATIONAL CONFERENCE ON, IEEE, 30 September 2012 (2012-09-30), pages 61-64, XP032333116, DOI: 10.1109/ICIP.2012.6466795 ISBN: 978-1-4673-2534-9 * the whole document * | 1-13 | |

TECHNICAL FIELDS
SEARCHED (IPC)

The present search report has been drawn up for all claims

| Place of search | Date of completion of the search | Examiner |
|---|---|---|
| Munich | 24 September 2014 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 30 5485

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2014

| Patent document cited in search report | Publication date | Patent family member(s) | Publication date |
|---|---|---|---|
| WO 2013107833 A1 | 25-07-2013 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RUBINSTEIN.** Towards Longer Long-Range Motion Trajectories. *British Machine Vision Conference,* 2012